# EUROPÄISCHE PATENTSCHRIFT

(11) **EP 3 099 959 B1**
(45) Veröffentlichungstag und Bekanntmachung des Hinweises auf die Patenterteilung: **07.02.2018**
(21) Anmeldenummer: 14821553.6
(22) Anmeldetag: 15.12.2014
(51) Int. Cl.: F16H 59/10

(54) **ÜBERSETZUNGSVORRICHTUNG UND VERFAHREN ZUM ÜBERSETZEN EINES BETÄTIGUNGSWINKELS EINES WÄHLHEBELS FÜR EINE SCHALTBETÄTIGUNG FÜR EIN FAHRZEUGGETRIEBE**
TRANSMISSION DEVICE AND METHOD FOR TRANSMITTING AN ACTUATING ANGLE OF A SELECTOR LEVER FOR A SHIFTING ACTUATION FOR A VEHICLE TRANSMISSION
DISPOSITIF DE DÉMULTIPLICATION ET PROCÉDÉ DE DÉMULTIPLICATION D'UN ANGLE D'ACTIONNEMENT D'UN LEVIER DE VITESSES POUR UN ACTIONNEMENT DE CHANGEMENT DE VITESSE D'UNE BOÎTE DE VITESSES DE VÉHICULE

(30) Priorität: 28.01.2014 DE 102014201477
(43) Veröffentlichungstag der Anmeldung: 07.12.2016
(73) Patentinhaber: ZF Friedrichshafen AG, 88046 Friedrichshafen (DE)
(72) Erfinder: VOELZ, Michael, 49356 Diepholz (DE); BORMANN, Dirk, 49143 Bissendorf (DE)
(86) Internationale Anmeldenummer: PCT/EP2014/077718
(87) Internationale Veröffentlichungsnummer: WO 2015/113692

(56) Entgegenhaltungen:
- DE-A1-102006 044 404
- DE-A1-102007 032 545
- DE-A1-102010 028 965
- DE-B3-102006 021 078
- US-A- 4 873 883

## Beschreibung

Die vorliegende Erfindung bezieht sich auf eine Übersetzungsvorrichtung zum Übersetzen eines Betätigungswinkels eines Wählhebels für eine Schaltbetätigung für ein Fahrzeuggetriebe, ein Verfahren zum Herstellen einer entsprechenden Übersetzungsvorrichtung sowie auf ein Verfahren zum Übersetzen eines Betätigungswinkels eines Wählhebels für eine Schaltbetätigung für ein Fahrzeuggetriebe.

Bei einem Fahrzeuggetriebe erfolgt üblicherweise die Auswahl von Übersetzungsstufen bzw. die Steuerung von Schaltprogrammen mittels einer im Griffbereich des Fahrers angeordneten Betätigungseinrichtung. Hierbei kommen Betätigungselemente wie Schalthebel oder Wählhebel zum Einsatz, die beispielsweise zwischen den Frontsitzen, im Bereich des Lenkrads oder in anderen Bereichen des Fahrzeuginnenraums angeordnet sind. Meistens werden entsprechende Schaltbetätigungseinrichtungen für einen speziellen Fahrzeugtyp entwickelt, um den unterschiedlichen Anforderungen in Bezug auf Erreichbarkeit und Ergonomie sowie sich der daraus ergebenden Betätigungswinkel und Betätigungswege gerecht zu werden. Dabei sind konstruktive Randbedingungen für den Einbau zu beachten. Eine Variantenbildung bekannter Betätigungseinrichtungen erfolgt durch unterschiedliche speziell für die Variante ausgelegte Bauteile.

Die Offenbarungsschrift DE 102010 028965 A1 betrifft eine Betätigungseinrichtung zur Auswahl von Schaltstufen eines Fahrzeuggetriebes, die ein Hebelgehäuse, einen Wählhebel sowie eine Übertragungseinrichtung zur Übertragung von Schaltbefehlen an das Getriebe umfasst. Die Betätigungseinrichtung zeichnet sich durch einen zwischen Hebelgehäuse und Übertragungseinrichtung angeordneten, wechselbaren Moduladapter aus. Der Moduladapter dient zur Anpassung des Ergonomiepunkts der Betätigungseinrichtung in vertikaler und/oder horizontaler Richtung und damit an unterschiedliche Einbausituationen. DE 10 2006 044 404 A offenbart eine Übersetzungsvorrichtung zum Übersetzen eines Betätigungswinkels eines Wählhebels für eine Schaltbetätigung für ein Fahrzeuggetriebe, wobei von dem Wählhebel eine Mehrzahl von Betätigungswinkeln einnehmbar ist, wobei ein Betätigungswinkel in den Geberwinkel für ein Geberelement eines Sensors übersetzt wird. Vor diesem Hintergrund schafft die vorliegende Erfindung eine verbesserte Übersetzungsvorrichtung zum Übersetzen eines Betätigungswinkels eines Wählhebels für eine Schaltbetätigung für ein Fahrzeuggetriebe, ein Verfahren zum Herstellen einer entsprechenden Übersetzungsvorrichtung zum Übersetzen eines Betätigungswinkels eines Wählhebels für eine Schaltbetätigung für ein Fahrzeuggetriebe sowie ein Verfahren zum Übersetzen eines Betätigungswinkels eines Wählhebels für eine Schaltbetätigung für ein Fahrzeuggetriebe gemäß den Hauptansprüchen. Vorteilhafte Ausgestaltungen ergeben sich aus den Unteransprüchen und der nachfolgenden Beschreibung.

Mittels eines Drehschubgetriebes kann eine Winkelposition eines Betätigungselements oder Wählhebels auf eine Sensoreinrichtung übertragen werden, wobei ein konfigurierbarer Kraftangriffspunkt des Drehlagers des Drehschubgetriebes an einem der Hebel eine Veränderung der Übersetzung bewirken kann. Dabei kann das Betätigungselement eine Drehung eines Übersetzungshebels bewirken, wobei die Drehung oder Auslenkung des Übersetzungshebels auf einen zweiten, mit einem Sensor ausgestatteten oder einen Sensor ansprechenden Hebel übertragen wird. Entscheidend ist dabei, dass bei der Übertragung der Drehung oder Auslenkung des Übersetzungshebels auf den zweiten Hebel eine Übersetzung oder ein Proportionalwert einstellbar ist.

Eine Übersetzungsvorrichtung zum Übersetzen eines Betätigungswinkels eines Wählhebels für eine Schaltbetätigung für ein Fahrzeuggetriebe umfasst:
einen Übersetzungshebel, der zum Aufnehmen des Betätigungswinkels des Wählhebels drehbar um eine erste Achse gelagert ist;
einen Signalhebel, der zum Bereitstellen eines Geberwinkels für ein Geberelement eines Sensors drehbar um eine zweite Achse gelagert ist; und
eine Mitnahmeeinrichtung, die den Übersetzungshebel mit dem Signalhebel koppelt, um den Betätigungswinkel in den Geberwinkel des Signalhebels zu übersetzen, wobei ein Kraftangriffspunkt zwischen dem Übersetzungshebel und dem Signalhebel konfigurierbar ist, um einen Proportionalwert zwischen dem Betätigungswinkel und dem Geberwinkel einzustellen.

Ein Fahrzeug, insbesondere ein Kraftfahrzeug, kann ein Getriebe oder Fahrzeuggetriebe aufweisen. Das Fahrzeuggetriebe kann eine Mehrzahl von Übersetzungsstufen oder Schaltprogrammen aufweisen. Eine Auswahl einer Übersetzungsstufe der Mehrzahl von Übersetzungsstufen oder eine Auswahl eines Schaltprogramms der Mehrzahl von Schaltprogrammen kann mittels eines Wählhebels erfolgen. Hierzu kann der Wählhebel eine Mehrzahl von Betätigungswinkeln einnehmen. Einem Betätigungswinkel kann eine Übersetzungsstufe oder ein Schaltprogramm des Fahrzeuggetriebes zugeordnet sein. Unter einem Wählhebel kann allgemein eine Betätigungseinrichtung oder ein Schalthebel verstanden werden. Der Übersetzungshebel kann eine Schnittstelle zum Aufnehmen des Betätigungswinkels des Wählhebels aufweisen. Die erste Achse und die zweite Achse können beabstandet voneinander angeordnet sein. Die erste Achse und die zweite Achse können in einem Toleranzbereich parallel zueinander ausgerichtet sein. Der Betätigungswinkel und der Geberwinkel können proportional zueinander sein. So kann der Geberwinkel ansprechend auf den Betätigungswinkel und einen Proportionalwert bestimmt werden. Der Kraftangriffspunkt der Mitnahmeeinrichtung kann fest mit dem Übersetzungshebel und gleichzeitig oder ergänzend mit dem Signalhebel verbunden sein.

Die Mitnahmeeinrichtung kann ein Koppelelement und eine Führungseinrichtung für das Koppelelement umfassen. Insbesondere kann die Mitnahmeeinrichtung eine lineare Führungseinrichtung umfassen. Dabei ist das Koppelelement in einer Aufnahme an dem Übersetzungshebel anordenbar und die Führungseinrichtung ist an dem Signalhebel anordenbar. In einer alternativen Ausführungsform ist das Koppelelement in einer Aufnahme an dem Signalhebel anordenbar und die Führungseinrichtung ist an dem Übersetzungshebel anordenbar. Die Führungseinrichtung kann formschlüssig und ergänzend oder alternativ kraftschlüssig mit dem Übersetzungshebel oder dem Signalhebel verbunden sein. Das Koppelelement kann in die Führungseinrichtung eingreifen. Die Führungseinrichtung kann als eine Nut, ein Profil oder eine Schiene ausgebildet sein.

Das Koppelelement kann als ein Stift oder als ein Bolzen ausgeführt sein oder einen Stift oder einen Bolzen umfassen. Auch kann das Koppelelement als ein Stift oder Bolzen mit einem Gleitelement ausgebildet sein. So kann das Koppelelement als ein Steckstift, ein Andrehbolzen oder als ein Anschlussstift ausgebildet sein. Das Koppelelement kann sich in dem Führungselement entlang einer vorgegebenen Führungsbahn bewegen. Dabei kann die Führungsbahn linear verlaufen. Wenn das Koppelelement als ein Stift oder Bolzen ausgebildet ist, so kann eine Seite des Koppelelements in einer Aufnahme im Übersetzungshebel oder Signalhebel angeordnet sein und die andere Seite kann in dem Führungselement geführt werden. So können sich die Winkel der beiden Hebel zueinander verändern. So können der Betätigungswinkel und der Geberwinkel voneinander verschieden sein. Alternativ kann ein Stift oder Bolzen auch mit einem Gleitelement kombiniert werden. So kann das Gleitelement in dem Führungselement gleiten. Das Gleitelement kann ein Drehlager aufweisen, in dem ein Teil des Stifts oder Bolzen angeordnet ist. Weiterhin kann das Gleitelement zumindest ein Gleitlager aufweisen.

Günstig ist es auch, wenn der Übersetzungshebel zumindest eine weitere Aufnahme aufweist. Dabei kann die zumindest eine weitere Aufnahme und die zumindest eine Aufnahme radial zu der Rotationsachse des Übersetzungshebels angeordnet sein. Die Aufnahme und die weitere Aufnahme können je einen unterschiedlichen Abstand zu der ersten Achse aufweisen. Dabei kann das Koppelelement in der zumindest einen Aufnahme und ergänzend oder alternativ der zumindest einen weiteren Aufnahme anordenbar sein. In einer alternativen Ausführungsform kann der Signalhebel über eine Aufnahme und zumindest eine weitere Aufnahme verfügen, wobei das Koppelelement in der Aufnahme oder alternativ in der zumindest einen weiteren Aufnahme anordenbar ist. Durch zwei voneinander örtlich verschiedene Aufnahmen, beziehungsweise von der zugeordneten Achse unterschiedlich beabstandete Aufnahmen, kann der Proportionalwert zwischen dem Betätigungswinkel und dem Geberwinkel konfiguriert oder eingestellt werden.

Ferner kann an dem Signalhebel als ein Geberelement zumindest ein Magnet angeordnet sein. In einer alternativen Ausführungsform kann an dem Signalhebel als Geberelement ein Sensor angeordnet sein. Wenn als Geberelement ein Magnet an dem Signalhebel angeordnet ist, kann eine Position oder ein Winkel, insbesondere der Geberwinkel des Signalhebels, von einem Sensor, einer Mehrzahl von Sensoren oder einem Sensorfeld einfach und kostengünstig erfasst werden.

Neben dem Signalhebel kann eine Leiterplatte angeordnet sein. Dabei kann die Leiterplatte zumindest einen Sensor umfassen. Der zumindest eine Sensor kann in der Leiterplatte integriert sein oder auf der Leiterplatte angeordnet sein. Die Leiterplatte kann ein Sensorfeld oder eine Mehrzahl an Sensoren aufweisen. Das Geberelement kann entlang einer Kreisbahn über die Leiterplatte in einer zur Leiterplatte in einem Toleranzbereich parallelen Ebene bewegbar sein. Der zumindest eine Sensor oder das Sensorfeld kann ausgebildet sein, eine Position des Geberelements oder einen Geberwinkel des Signalhebels zu bestimmen. Ein Signal des zumindest einen Sensors oder des Sensorfelds kann eine Position des Geberelements, einen Geberwinkel, eine Übersetzungsstufe oder ein Schaltprogramm des Fahrzeuggetriebes repräsentieren.

Ferner kann die Übersetzungsvorrichtung eine Sperreinrichtung aufweisen, die ausgebildet ist, um in einem verriegelten Zustand eine Bewegung des Übersetzungshebels und ergänzend oder alternativ des Signalhebels zu sperren. Dabei kann die Sperreinrichtung in dem verriegelten Zustand in eine Sperraussparung des Übersetzungshebels eingreifen. So kann der Übersetzungshebel und ergänzend oder alternativ der Signalhebel eine Aussparung oder eine Bohrung aufweisen, in die eine Sperreinrichtung eingreifen kann. Die Sperreinrichtung kann mechanisch oder elektrisch bewegbar sein und in eine Position bewegbar sein, die den Übersetzungshebel oder den Signalhebel in einer Rotationsbewegung oder einer Winkeländerung sperrt.

Günstig ist es auch, wenn die Übersetzungsvorrichtung in einer Ausführungsform ein Gehäuse aufweist. Dabei kann die erste Achse und ergänzend oder alternativ die zweite Achse unter Verwendung des Gehäuses gestützt werden. Die erste Achse und ergänzend oder alternativ die zweite Achse können an dem Gehäuse gelagert sein. Ein Gehäuse kann die Übersetzungsvorrichtung schützen. Auch kann ein Gehäuse eine leichte Montage einer vormontierten Übersetzungsvorrichtung schaffen.

Ein Verfahren zum Herstellen einer Übersetzungsvorrichtung zum Übersetzen eines Betätigungswinkels eines Wählhebels für eine Schaltbetätigung für ein Fahrzeuggetriebe weist die folgenden Schritte auf:
Bereitstellen eines Übersetzungshebels, eines Signalhebels und einer Mitnahmeeinrichtung;
Konfigurieren eines Kraftangriffspunkts der Mitnahmeeinrichtung zwischen dem Übersetzungshebel und dem Signalhebel, um einen Proportionalwert zwischen dem Betätigungswinkel und einem Geberwinkel des Signalhebels einzustellen; und
Anordnen des Übersetzungshebels, der Mitnahmeeinrichtung und des Signalhebels, wobei der Übersetzungshebel zum Aufnehmen des Betätigungswinkels des Wählhebels drehbar um eine erste Achse gelagert ist, wobei der Signalhebel zum Bereitstellen des Geberwinkels für ein Geberelement eines Sensors drehbar um eine zweite Achse gelagert ist, und wobei die Mitnahmeeinrichtung den Übersetzungshebel mit dem Signalhebel koppelt, um den Betätigungswinkel in den Geberwinkel des Signalhebels zu übersetzen.

Auch durch ein Verfahren zum Herstellen einer Übersetzungsvorrichtung zum Übersetzen eines Betätigungswinkels eines Wählhebels in einen Geberwinkel für eine Schaltbetätigung für ein Fahrzeuggetriebe kann die der Erfindung zugrunde liegende Idee kostengünstig und effektiv umgesetzt werden. Im Schritt des Konfigurierens kann ein Element der Mitnahmeeinrichtung, wie ein Bolzen oder ein Stift, in einer Aufnahme des Übersetzungshebels angeordnet werden, um den Proportionalwert zwischen dem Betätigungswinkel und dem Geberwinkel des Signalhebels einzustellen.

Ein Verfahren zum Übersetzen eines Betätigungswinkels eines Wählhebels für eine Schaltbetätigung für ein Fahrzeuggetriebe umfasst die folgenden Schritte:
Drehen des Übersetzungshebels um eine erste Achse ansprechend auf ein Betätigen des Wählhebels, um einen Betätigungswinkel einzustellen;
Übertragen der Bewegung des Übersetzungshebels auf einen Signalhebel, wobei der Betätigungswinkel auf einen Geberwinkel des Signalhebels übersetzt wird, wobei ein Proportionalwert zwischen dem Betätigungswinkel und dem Geberwinkel über einen konfigurierbaren Kraftangriffspunkt zwischen dem Übersetzungshebel und dem Signalhebel einstellbar ist; und
Bereitstellen des Geberwinkels für ein Geberelement eines Sensors mittels des Signalhebels, der drehbar um eine zweite Achse gelagert ist.

Ein Aspekt der vorliegenden Erfindung ist es, eine variable Schaltung mit integriertem Übersetzungssystem zu schaffen. Vorteilhaft kann eine Mehrfachfachentwicklung, um unterschiedlichen Anforderungen in Bezug auf Erreichbarkeit und Ergonomie sowie sich der daraus ergebenden Betätigungswinkel und Betätigungswege gerecht zu werden, vermieden werden. So schafft eine Variante der hier vorgestellten Idee eine Schaltbetätigung, die mit einem einheitlichen Elektronik- und Mechanikmodul unterschiedliche Varianten hinsichtlich der Betätigungswinkel und Betätigungswege ermöglicht.

Die Erfindung wird anhand der beigefügten Zeichnungen beispielhaft näher erläutert. Es zeigen:
- Fig. 1: eine schematische Darstellung eines Fahrzeugs mit einem Fahrzeuggetriebe und einer Übersetzungsvorrichtung für eine Schaltbetätigung für das Fahrzeuggetriebe gemäß einem Ausführungsbeispiel der vorliegenden Erfindung;
- Fig. 2: eine schematische Darstellung einer Übersetzungsvorrichtung eines Betätigungswinkels in einen Geberwinkel für eine Schaltbetätigung eines Fahrzeuggetriebes gemäß einem Ausführungsbeispiel der vorliegenden Erfindung;
- Fig. 3: eine Schnittdarstellung einer Übersetzungsvorrichtung gemäß einem Ausführungsbeispiel der vorliegenden Erfindung;
- Fig. 4: eine dreidimensionale Darstellung einer Übersetzungsvorrichtung gemäß einem Ausführungsbeispiel der vorliegenden Erfindung;
- Fig. 5: eine Explosionsdarstellung einer Übersetzungsvorrichtung gemäß einem Ausführungsbeispiel der vorliegenden Erfindung;
- Fig. 6: eine Frontansicht einer Übersetzungsvorrichtung in einer Grundstellung gemäß einem Ausführungsbeispiel der vorliegenden Erfindung;
- Fig. 7: eine Frontansicht eines Übersetzungshebels gemäß einem Ausführungsbeispiel der vorliegenden Erfindung;
- Fig. 8: eine Frontansicht einer Übersetzungsvorrichtung in einem ersten Betätigungswinkel gemäß einem Ausführungsbeispiel der vorliegenden Erfindung;
- Fig. 9: eine Frontansicht einer Übersetzungsvorrichtung in einem zweiten Betätigungswinkel gemäß einem Ausführungsbeispiel der vorliegenden Erfindung;
- Fig. 10: eine dreidimensionale Ansicht eines Übersetzungshebels gemäß einem Ausführungsbeispiel der vorliegenden Erfindung;
- Fig. 11 bis Fig. 19: schematische Darstellungen einer Leiterplatte mit davor angeordnetem Signalhebel gemäß einem Ausführungsbeispiel der vorliegenden Erfindung;
- Fig. 20 bis Fig. 28: schematische Darstellungen einer Übersetzungsvorrichtung gemäß einem Ausführungsbeispiel der vorliegenden Erfindung;
- Fig. 29: Ein Ablaufdiagramm eines Verfahrens zum Herstellen einer Übersetzungsvorrichtung gemäß einem Ausführungsbeispiel der vorliegenden Erfindung; und
- Fig. 30: ein Ablaufdiagramm eines Verfahrens zum Übersetzen eines Betätigungswinkels eines Wählhebels für eine Schaltbetätigung für ein Fahrzeuggetriebe gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

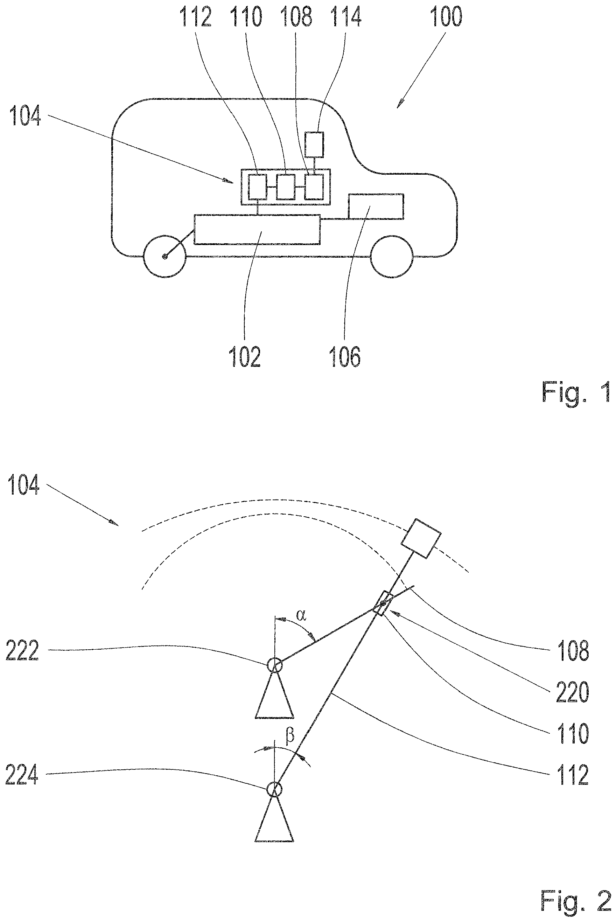

Fig. 1 zeigt eine schematische Darstellung eines Fahrzeugs 100 mit einem Fahrzeuggetriebe 102 und einer Übersetzungsvorrichtung 104 für eine Schaltbetätigung für das Fahrzeuggetriebe 102 gemäß einem Ausführungsbeispiel der vorliegenden Erfindung. Das Fahrzeug 100 umfasst einen Motor 106, der über ein Fahrzeuggetriebe 102 zumindest eine Achse des Fahrzeugs 100 antreibt. Die Übersetzungsvorrichtung 104 umfasst einen Übersetzungshebel 108, eine Mitnahmeeinrichtung 110 sowie einen Signalhebel 112. Das Fahrzeuggetriebe 102 umfasst eine Mehrzahl von Übersetzungsstufen bzw. eine Mehrzahl von Schaltprogrammen, die von einem mit der Übersetzungsvorrichtung 104 verbundenen Betätigungselement 114, welches in dem gezeigten Ausführungsbeispiel als ein Wählhebel 114 ausgebildet ist, einstellbar sind. Der Übersetzungshebel 108 ist ausgebildet, um ansprechend auf ein Betätigen des Wählhebels 114 um eine erste Achse gedreht zu werden. Nach Beendigung einer Drehung des Übersetzungshebels 108 hat der Übersetzungshebel 108 einen Betätigungswinkel eingenommen, der gemäß diesem Ausführungsbeispiel der Stellung des Wählhebels 114, also einem Betätigungswinkel des Wählhebels 114 entspricht. Die Mitnahmeeinrichtung 110 ist zum Übertragen der Bewegung des Übersetzungshebels 108 auf den Signalhebel 112 ausgebildet, wobei der Betätigungswinkel auf einen Geberwinkel des Signalhebels 112 übersetzt wird. Dazu ist der Signalhebel 112 um eine zweite Achse drehbar angeordnet. Ein Proportionalwert zwischen dem Betätigungswinkel und dem Geberwinkel ist über einen konfigurierbaren Kraftangriffspunkt zwischen dem Übersetzungshebel 108 und dem Signalhebel 112 einstellbar. Der Geberwinkel weist gemäß diesem Ausführungsbeispiel einen sich von dem Betätigungswinkel unterscheidenden Wert auf und bildet die Stellung des Wählhebels 114 ab. Durch den Signalhebel 112 kann der Geberwinkel für ein Geberelement eines Sensors eingestellt werden. Auf diese Weise kann durch den Sensor über den Übersetzungshebel 108 und den Signalhebel 112 ein aktueller Betätigungswinkel des Wählhebels 114 erfasst werden.

Fig. 2 zeigt eine schematische Darstellung einer Übersetzungsvorrichtung 104 eines Betätigungswinkels α in einen Geberwinkel β für eine Schaltbetätigung eines Fahrzeuggetriebes gemäß einem Ausführungsbeispiel der vorliegenden Erfindung. Bei dem Fahrzeuggetriebe kann es sich um ein Ausführungsbeispiel des in Fig. 1 gezeigten und mit dem Bezugszeichen 102 versehenen Fahrzeuggetriebes handeln. Bei der Übersetzungsvorrichtung 104 kann es sich um eine Variante des in Fig. 1 gezeigten und beschriebenen Ausführungsbeispiels einer Übersetzungsvorrichtung 104 handeln. Die Übersetzungsvorrichtung 104 umfasst einen Übersetzungshebel 108 sowie einen Signalhebel 112, die über eine Mitnahmeeinrichtung 110 gekoppelt sind. Die Mitnahmeeinrichtung 110 ist in einem Ausführungsbeispiel als ein Drehschubgetriebe ausgebildet. Die Mitnahmeeinrichtung 110 ist mit einem der beiden Hebel 108, 112, das heißt mit dem Übersetzungshebel 108 oder dem Signalhebel 112, fest an einem Kraftangriffspunkt 220 verbunden und mit dem anderen der beiden Hebel 112, 108, das heißt mit dem Signalhebel 112 oder dem Übersetzungshebel 108, über eine Schubverbindung verbunden, die sich linear entlang des Hebels 112, 108 verschieben lässt. Der Kraftangriffspunkt 220 ist in der Schubverbindung linear verschiebbar. Die Mitnahmeeinrichtung 110 koppelt den Übersetzungshebel 108 mit dem Signalhebel 112.

Der Übersetzungshebel 108 ist an einer ersten Achse 222 drehbar gelagert. Der Signalhebel 112 ist an einer zweiten Achse 224 drehbar gelagert. In Fig. 2 nicht gezeigt ist eine Schnittstelle zum Aufnehmen eines Betätigungswinkels α. Die Mitnahmeeinrichtung 110 ist ausgebildet, den von dem Übersetzungshebel 108 eingestellten Betätigungswinkel α in einen Geberwinkel β des Signalhebels zu überführen. Die Position des Kraftangriffspunkts 220 ist in einem Ausführungsbeispiel in Bezug auf den Übersetzungshebel und in einem weiteren Ausführungsbeispiel in Bezug auf den Signalhebel einfach konfigurierbar. Durch eine Änderung des Kraftangriffspunkts 220 an dem Übersetzungshebel 108 ist eine Änderung eines Proportionalwerts zwischen dem Betätigungswinkel α und dem Geberwinkel β einstellbar oder konfigurierbar.

Ein Aspekt der vorliegenden Erfindung ist es, mit einem einheitlichen Elektronik- und Mechanikmodul unterschiedliche Ausführungsvarianten hinsichtlich der Betätigungswinkel und Betätigungswege zu ermöglichen. Gelöst wird dies in einem Ausführungsbeispiel durch einen Übersetzungshebel 112, dessen Rotationspunkt 222 fest ist und der Kraftangriffspunkt variabel definiert werden kann. Die dabei sich ergebenden unterschiedlichen Hebelverhältnisse ermöglichen es, unterschiedliche Betätigungswege am Wirkbereich des äußeren Hebels darzustellen, die in eine über alle Lösungsvarianten gleichartige Bewegung des Signalgebers 112 umgesetzt wird. Die Positionsbestimmung des Betätigungshebels-in Fig. 1 mit dem Bezugszeichen 114 versehen-erfolgt durch ein Rastiersystem.

Dies ermöglicht ein variantenunabhängiges Gleichteilkonzept für die Sensoreinheit. Darüber hinaus kann unabhängig vom eigentlichen Hebel ein Signalgeber (beispielsweise ein Magnet) so positioniert werden, dass sich eine kompakte Baugröße des Gesamtsystems ergibt.

Die praktische Anwendung kann für eine einheitliche Shift-by-wire-Schaltbetätigung generiert werden, für die mehrere unterschiedliche Betätigungsvarianten existieren sollen. Die Art der Signalgebung wird durch das hier vorgestellte Konzept nicht beeinflusst. Beispielsweise sind kontaktgebundene oder berührungslose Sensoriken darstellbar. Die Idee ist sowohl für rastende als auch für monostabile Betätigungssysteme anwendbar.

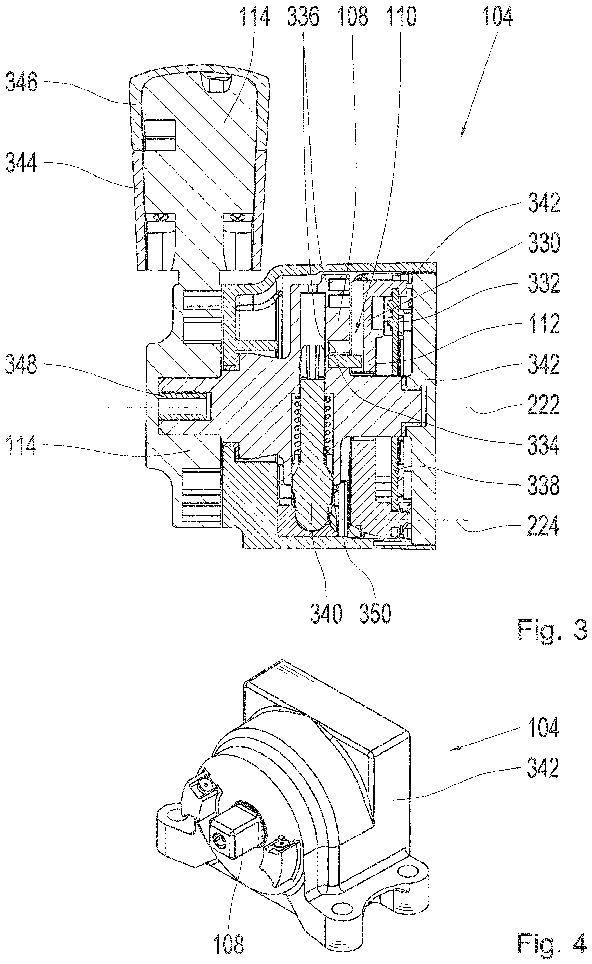

Fig. 3 zeigt eine Schnittdarstellung einer Übersetzungsvorrichtung 104 gemäß einem Ausführungsbeispiel der vorliegenden Erfindung. Bei der Übersetzungsvorrichtung 104 kann es sich um eine Variante des in Fig. 1 oder Fig. 2 gezeigten und beschriebenen Ausführungsbeispiels einer Übersetzungsvorrichtung 104 handeln.

Die Übersetzungsvorrichtung 104 umfasst einen Übersetzungshebel 108, der zum Aufnehmen des Betätigungswinkels des Wählhebels 114 drehbar um eine erste Achse 222 gelagert ist. Ferner umfasst die Übersetzungsvorrichtung 104 einen Signalhebel 112, der zum Bereitstellen eines Geberwinkels für ein Geberelement 330, beispielsweise einen Magneten, eines Sensors 332 drehbar um eine zweite Achse 224 gelagert ist. Schließlich umfasst die Übersetzungsvorrichtung 104 eine Mitnahmeeinrichtung 110, durch die eine Bewegung des Übersetzungshebels 108 auf den Signalhebel 112 übertragen wird. Dadurch kann der Betätigungswinkel in den Geberwinkel des Signalhebels 112 übersetzt werden. Dabei ist ein Kraftangriffspunkt zwischen dem Übersetzungshebel 108 und dem Signalhebel 112 konfigurierbar, um einen Proportionalwert zwischen dem Betätigungswinkel und dem Geberwinkel einzustellen.

Die Mitnahmeeinrichtung 110 umfasst ein als Stift ausgeführtes Koppelelement 334 und eine, insbesondere lineare, Führungseinrichtung für das Koppelelement 334. Das Koppelelement 334 ist in einer Aufnahme 336 an dem Übersetzungshebel 108 angeordnet. Das Koppelelement kann dabei lösbar oder unlösbar mit dem Übersetzungshebel 108 verbunden sein. Die Führungseinrichtung der Mitnahmeeinrichtung ist in an dem Signalhebel 112 angeordnet. Alternativ kann ein Koppelelement in einer Aufnahme an dem Signalhebel 112 und die Führungseinrichtung an dem Übersetzungshebel 108 angeordnet sein.

Der Übersetzungshebel 108 weist zumindest eine weitere Aufnahme 336, hier drei Aufnahmen 336 auf. Die Aufnahmen 336 sind als Sacklöcher oder Bohrungen ausgebildet. Dabei sind die Aufnahmen 336 radial zu der Rotationsachse des Übersetzungshebels angeordnet. Die Aufnahmen 336 weisen einen unterschiedlichen Abstand zu der ersten Achse 222 auf. Das Koppelelement 334 ist in einer ausgewählten der Aufnahmen 336 angeordnet. Je nach Anordnung des Koppelelements 334 in einer der Aufnahmen 336 wird ein unterschiedlicher Proportionalwert zwischen dem Betätigungswinkel und dem Geberwinkel eingestellt.

Neben dem Signalhebel 112 ist eine Leiterplatte 338 angeordnet. Dabei ist an der Leiterplatte 338 zumindest ein Sensor 332 angeordnet. Das Geberelement 330 ist entlang einer Kreisbahn um die zweite Achse 224 in einer zur Leiterplatte 338 in einem Toleranzbereich parallelen Ebene über die Leiterplatte 338 hinweg bewegbar. Gemäß diesem Ausführungsbeispiel weist die Leiterplatte 338 eine Mehrzahl von Sensoren 332 auf. Die Sensoren 332 sind dabei in einem Sensorfeld angeordnet.

Gemäß diesem Ausführungsbeispiel ist eine Sperreinrichtung 340 ein Bestandteil der Übersetzungsvorrichtung 104. Die Sperreinrichtung 340 sperrt in einem verriegelten Zustand eine Bewegung des Übersetzungshebels 108 oder des Signalhebels 112. Dazu greift die Sperreinrichtung 340 in dem verriegelten Zustand in eine Sperraussparung des Übersetzungshebels 108 ein.

Gemäß diesem Ausführungsbeispiel weist die Übersetzungsvorrichtung 104 ein Gehäuse 342 auf. Dabei kann das Gehäuse mehrteilig ausgeführt sein. Die Achsen 222, 224 werden durch das Gehäuse 342 gestützt oder gelagert. So wird der Übersetzungshebel 108 von dem Gehäuse 342 gestützt beziehungsweise um die erste Achse 222 drehbar gelagert. Entsprechend wird der Signalhebel 112 von dem Gehäuse 342 gestützt beziehungsweise um die zweite Achse 224 drehbar gelagert. In einem alternativen Ausführungsbeispiel wird die zweite Achse 224 beziehungsweise der Signalhebel 112 von der Leiterplatte 338 gestützt beziehungsweise um die zweite Achse 224 drehbar gelagert. Hierbei können in Ausführungsbeispielen zusätzliche Lager zum Einsatz kommen.

Der Wählhebel 114 der Übersetzungseinrichtung 104 weist eine untere Blende 344 sowie eine obere Blende 346 auf. Die untere Blende 344 formt zusammen mit der oberen Blende 346 und einem Teil des Wählhebels 114 einen Schaltknauf, der beispielsweise von einem Fahrer eines Fahrzeugs bedient werden kann.

In einem Ausführungsbeispiel ist an dem Übersetzungshebel 108 eine Schraube 348 angeordnet, deren Haupterstreckungsrichtung beziehungsweise Wirkrichtung der ersten Achse 222 entspricht. Die Schraube 348 ist in einem Ausführungsbeispiel ausgebildet, den Wählhebel 114 mit dem Übersetzungshebel 108 zu verbinden.

In einem Ausführungsbeispiel ist an dem Gehäuse 342 ein Anschlag 350 angeordnet, der auf die Sperreinrichtung 340, auf den Übersetzungshebel 108 oder auf die Sperreinrichtung 340 wirkt. Dabei wirkt der Anschlag 350 in einem Ausführungsbeispiel als eine Arretierung.

Fig. 4 zeigt eine dreidimensionale Darstellung einer Übersetzungsvorrichtung 104 gemäß einem Ausführungsbeispiel der vorliegenden Erfindung. Bei der Übersetzungsvorrichtung 104 kann es sich um eine Variante des in Fig. 1 bis Fig. 3 gezeigten und beschriebenen Ausführungsbeispiels einer Übersetzungsvorrichtung 104 handeln. In Fig. 4 ist die Übersetzungseinrichtung 104 in einem montierten Zustand mit einem Gehäuse 342 versehen dargestellt. Eine Schnittstelle des Übertragungswinkels 108 zum Aufnehmen des Betätigungswinkels des Wählhebels ragt aus dem Gehäuse heraus. Die Schnittstelle ist als ein Vierkant mit gefasten Kanten ausgebildet. Das Gehäuse weist Schraublöcher auf, um die Übersetzungsvorrichtung 104 in einem Fahrzeug oder an einem Fahrzeuggetriebe zu montieren.

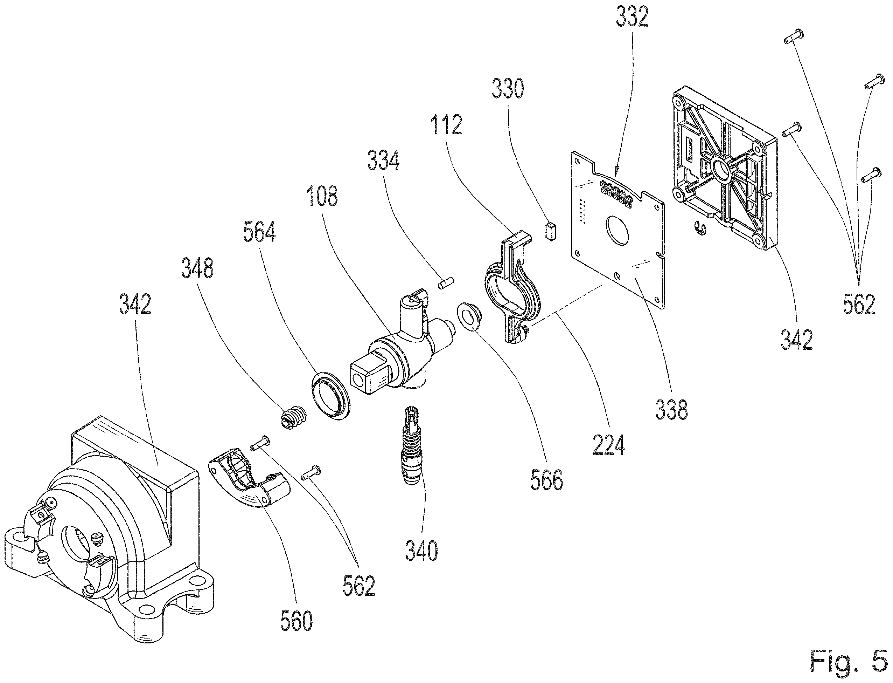

Fig. 5 zeigt eine Explosionsdarstellung einer Übersetzungsvorrichtung 104 gemäß einem Ausführungsbeispiel der vorliegenden Erfindung. Bei der Übersetzungsvorrichtung 104 kann es sich um eine Variante eines in Fig. 1 bis Fig. 4 gezeigten und beschriebenen Ausführungsbeispiels einer Übersetzungsvorrichtung 104 handeln. Die Explosionsdarstellung zeigt die einzelnen Elemente einer in Fig. 3 oder Fig. 4 gezeigten Übersetzungsvorrichtung 104 in einer Explosionsdarstellung. Die Übersetzungsvorrichtung 104 umfasst ein erstes Element eines Gehäuses 342, eine Lagerschale 560, zwei Montageschrauben 562 zum Fixieren der Lagerschale 560 an dem Gehäuse 342, eine Schraube 348, einen Lagerring 564, einen Übersetzungshebel 108, eine Sperreinrichtung 340, ein Koppelelement 334, einen Lagerring 566, einen Signalhebel 112, ein Geberelement 330, eine Leiterplatte 338 mit einer Mehrzahl von Sensoren 332, sowie ein zweites Element des Gehäuses 342, welches mit vier Montageschrauben 562 an dem ersten Element des Gehäuses 342 fixierbar ist.

Die Leiterplatte 338 weist im Bereich der zweiten Achse 224 eine Aussparung auf, in der der Signalhebel 112 anordenbar beziehungsweise lagerbar ist.

Das zweite Element des Gehäuses 342 weist ein Sackloch oder Durchgangsloch im Bereich der ersten Achse oder Rotationsachse auf. In dem Sackloch oder Durchgangsloch ist der Lagerring 566 anordenbar. So kann der Übersetzungshebel 108 von dem Lagerring 566 und dem Lagerring 564 gelagert werden.

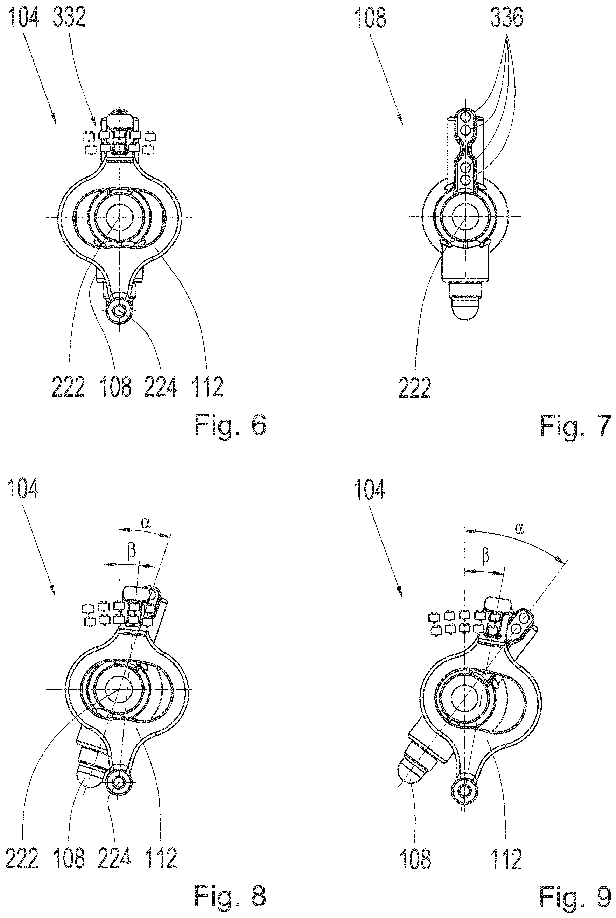

Fig. 6 zeigt eine Frontansicht einer Übersetzungsvorrichtung 104 in einer Grundstellung gemäß einem Ausführungsbeispiel der vorliegenden Erfindung. Bei der Übersetzungsvorrichtung 104 kann es sich um eine Variante eines in Fig. 1 bis Fig. 5 gezeigten und beschriebenen Ausführungsbeispiels einer Übersetzungsvorrichtung 104 handeln. In dem Ausführungsbeispiel weisen die erste Achse 222 und die zweite Achse 224 einen Abstand von 28 mm auf. Auf der Leiterplatte 338 sind in einem Abstand von 49 mm und 53 mm von der zweiten Achse 224 in je einem Kreisbogen eine Mehrzahl von Sensoren 332 angeordnet, wobei je Kreisbogen fünf Sensoren 332 angeordnet sind. Dabei sind je zwei Sensoren 332 in einem identischen Winkel angeordnet. Der Signalhebel 112 weist eine Aussparung zur Durchführung des Übersetzungshebels 108 auf. Die erste Achse 222 verläuft durch diese Aussparung in dem Signalhebel 112.

Die hier und im Folgenden genannten Abmessungen und Winkel sind dabei lediglich beispielhaft genannt.

Fig. 7 zeigt eine Frontansicht eines Übersetzungshebels 108 gemäß einem Ausführungsbeispiel der vorliegenden Erfindung. Bei dem Übersetzungshebel 108 kann es sich um eine Variante des in Fig. 6 gezeigten und beschriebenen Ausführungsbeispiels eines Übersetzungshebels 108 handeln. Der Übersetzungshebel 108 weist vier Aufnahmen 336 für ein Koppelelement einer Mitnahmeeinrichtung einer Übersetzungsvorrichtung auf. Eine erste Aufnahme 336 ist in einem Abstand von 11,1 mm zur ersten Achse 222 angeordnet, eine zweite Aufnahme 336 ist in einem Abstand von 14,8 mm zur ersten Achse 222 angeordnet, eine dritte Aufnahme 336 ist in einem Abstand von 26 mm zur ersten Achse 222 angeordnet und eine vierte Aufnahme 336 ist in einem Abstand von 30 mm zur ersten Achse 222 angeordnet. Die Aufnahmen 336 sind als Sacklöcher ausgebildet.

Fig. 8 zeigt eine Frontansicht einer Übersetzungsvorrichtung 104 in einem ersten Betätigungswinkel gemäß einem Ausführungsbeispiel der vorliegenden Erfindung. Bei der Übersetzungsvorrichtung 104 kann es sich um eine Variante des in den Fig. 6 oder Fig. 7 gezeigten und beschriebenen Ausführungsbeispiels einer Übersetzungsvorrichtung 104 handeln. Der Übersetzungshebel 108 ist in einem Winkel von 18,3° ausgelenkt angeordnet. Der Signalhebel 112 ist in einem Winkel von 5,17° ausgelenkt von der in Fig. 6 dargestellten Grundstellung angeordnet. So beträgt in dem in Fig. 8 gezeigten Ausführungsbeispiel der Betätigungswinkel α= 18,3° und der Geberwinkel β = 5,17°.

Fig. 9 zeigt eine Frontansicht einer Übersetzungsvorrichtung in einem zweiten Betätigungswinkel gemäß einem Ausführungsbeispiel der vorliegenden Erfindung. Bei der Übersetzungsvorrichtung 104 kann es sich um eine Variante des in den Fig. 6 bis Fig. 8 gezeigten und beschriebenen Ausführungsbeispiels einer Übersetzungsvorrichtung 104 handeln. Der Übersetzungshebel 108 ist in einem Winkel von 36,6° ausgelenkt angeordnet. Der Signalhebel 112 ist in einem Winkel von 10,16° ausgelenkt von der in Fig. 6 dargestellten Grundstellung angeordnet. So beträgt in dem in Fig. 8 gezeigten Ausführungsbeispiel der Betätigungswinkel α= 36,6° und der Geberwinkel β = 10,16°.

Die Figuren Fig. 6 bis Fig. 9 zeigen ein Ausführungsbeispiel einer Übersetzungsvorrichtung, bei der eine Mehrzahl von Sensoren 332 auf einer Leiterplatte entlang eines Kreisbogens angeordnet sind, wobei zwischen den durch die Anordnung der Sensoren bedingten Geberwinkeln β ein Winkel von 5,17° ausgebildet ist.

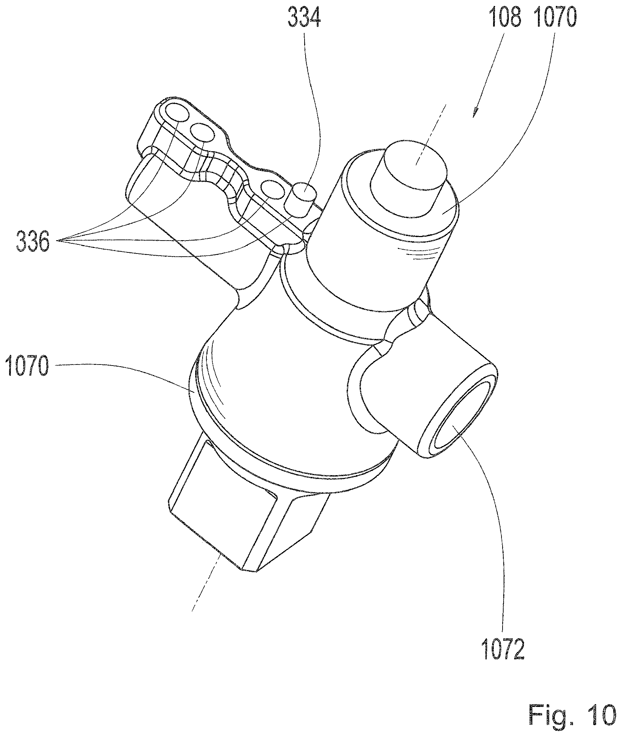

Fig. 10 zeigt eine dreidimensionale Ansicht eines Übersetzungshebels 108 gemäß einem Ausführungsbeispiel der vorliegenden Erfindung. Bei dem Übersetzungshebel 108 kann es sich um eine Variante des in den vorangegangenen Figuren gezeigten und beschriebenen Ausführungsbeispiels eines Übersetzungshebels 108 handeln. Der Übersetzungshebel 108 ist derart ausgebildet, dass zwei Gegenlager 1070 ausgebildet sind. Die Gegenlager sind entsprechend einer Rotationsachse des Übersetzungshebels 108 angeordnet. Weiterhin weist der Übersetzungshebel 108 drei Aufnahmen 336 für ein Koppelelement 334 auf. Die drei Aufnahmen 336 sind radial zu der Rotationsachse des Übersetzungshebels 108 auf einem Arm angeordnet, wobei die Rotationsachse durch die zwei Gegenlager 1070 bestimmt ist. In der zur Rotationsachse nächsten Aufnahme 336 ist ein Koppelelement 334 angeordnet. Die Aufnahmen 336 sind als Bohrlöcher oder Sacklöcher ausgebildet, das Koppelelement 334 ist als ein Stift oder ein Bolzen ausgebildet. Auf der zur Rotationsachse den Aufnahmen 336 gegenüberliegenden Seite weist der Übersetzungshebel 108 eine Sperraussparung 1072 in einem Arm auf, die ausgebildet ist, ein Sperrelement aufzunehmen, wodurch eine Rotation des Übersetzungshebels 108 verhindert werden kann.

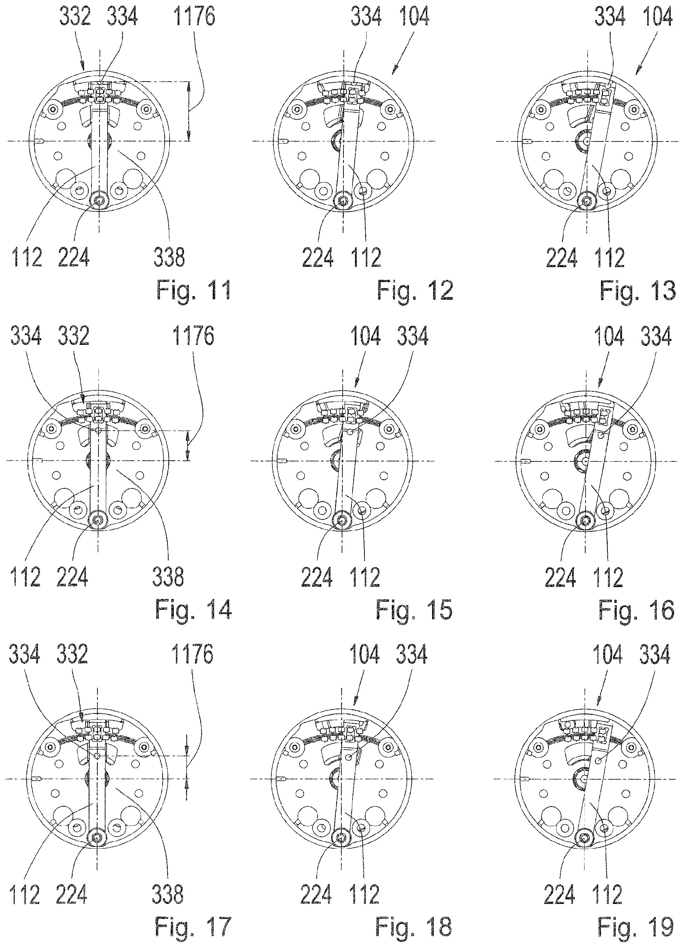

Fig. 11 bis Fig. 19 zeigen eine schematische Darstellung einer Leiterplatte 338 mit davor angeordnetem Signalhebel 112 gemäß einem Ausführungsbeispiel der vorliegenden Erfindung. Bei der Leiterplatte 338 kann es sich um eine Variante der beispielsweise in Fig. 5 bis Fig. 9 gezeigten und beschriebenen Ausführungsbeispiels einer Leiterplatte 338 Übersetzungsvorrichtung 104 handeln. Die Leiterplatte 338 weist eine runde Form auf. Ein Signalhebel 112 ist um eine zweite Achse 224, die im Wesentlichen senkrecht auf der Leiterplatte 338 steht, drehbar gelagert. Eine Mehrzahl von Sensoren 332 sind derart angeordnet, dass immer paarweise eine einem Geberwinkel zuordenbare Position des Geberhebels 112 erkennbar ist. Dabei sind fünf voneinander verschiedene Positionen erkennbar, deren Geberwinkel sich in einem Ausführungsbeispiel immer um einen festen Wert voneinander unterscheiden. In dem gezeigten Ausführungsbeispiel betragen die von der Mehrzahl von Sensoren auflösbaren Winkelunterschiede wie in Fig. 8 oder Fig. 9 dargestellt 5,17°. Dabei entspricht dies in Fig. 11 bis Fig. 13 einem Betätigungswinkel von 10°, in Fig. 14 bis Fig. 16 einem Betätigungswinkel von 15° sowie in Fig. 17 bis Fig. 19 einem Betätigungswinkel von 18,3°. Der in den Ausführungsbeispielen voneinander abweichende Proportionalwert zwischen dem Betätigungswinkel und dem Geberwinkel wird durch eine Veränderung der Anordnung eines Koppelelements 334 erreicht. So entspricht die Anordnung des Koppelelements 334 bei dem in Fig. 10 dargestellten Ausführungsbeispiel eines Übersetzungshebels 108 der radial von der ersten Achse 222 entferntesten Aufnahme 336 der Darstellung in Fig. 11 bis Fig. 13, der mittleren Aufnahme 336 der Darstellung in Fig. 14 bis Fig. 16 und der am nächsten zur ersten Achse 222 angeordneten Aufnahme 336 der Darstellung in Fig. 17 bis Fig. 19. Der Abstand des Kraftangriffspunkts zur zweiten Achse 224 beziehungsweise des Koppelelements 334 zur zweiten Achse 224 ist mit dem Bezugszeichen 1176 bezeichnet.

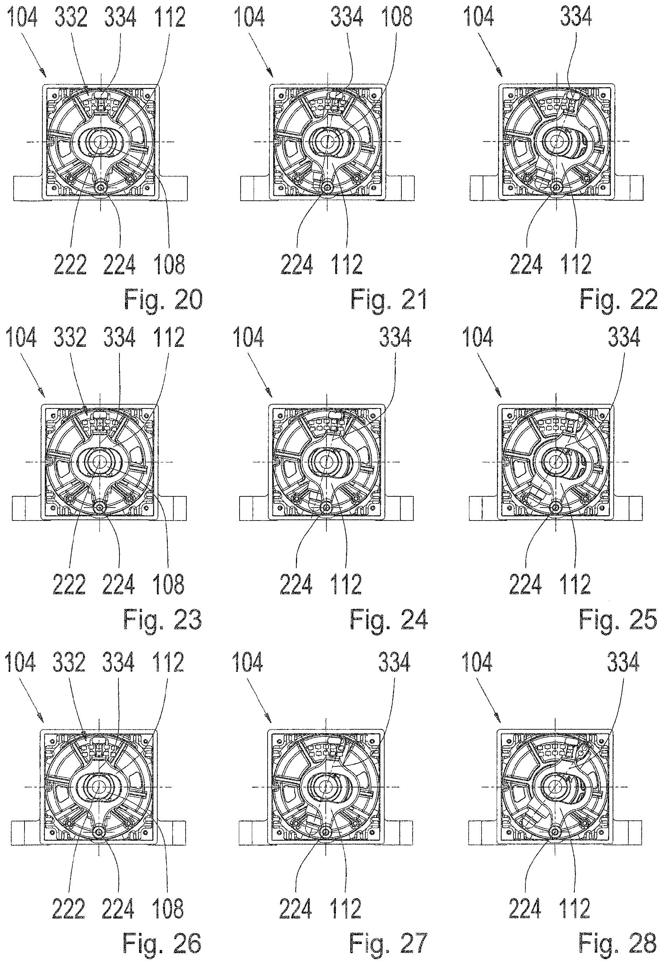

Fig. 20 bis Fig. 28 zeigt eine schematische Darstellung einer Übersetzungsvorrichtung 104 gemäß einem Ausführungsbeispiel der vorliegenden Erfindung. Bei der Übersetzungsvorrichtung 104 kann es sich um eine Variante des in den vorangegangenen Figuren gezeigten und beschriebenen Ausführungsbeispiels einer Übersetzungsvorrichtung 104 handeln. Die Figuren Fig. 20 bis Fig. 28 weisen eine Analogie zu den Figuren Fig. 11 bis 19. In Fig. 20 bis Fig. 28 ist je eine Übersetzungsvorrichtung 104 im montierten Zustand in einer Blickrichtung entlang der ersten Achse 222 dargestellt, wobei hinter einem zweiten Element des Gehäuses 342 ein Signalhebel 112 und dahinter ein Übersetzungshebel 108 dargestellt sind. Als schwarzer Punkt ist ein Koppelelement 334 dargestellt.

Der Signalhebel 112 ist um die zweite Achse 224, die im Wesentlichen parallel zur ersten Achse 222 ausgerichtet ist, drehbar gelagert. Eine Mehrzahl von Sensoren 332 sind derart angeordnet, dass immer paarweise eine einem Geberwinkel zuordenbare Position des Geberhebels 112 erkennbar ist. Dabei sind fünf voneinander verschiedene Positionen erkennbar, deren Geberwinkel sich in einem Ausführungsbeispiel immer um einen festen Wert voneinander unterscheiden. In dem gezeigten Ausführungsbeispiel betragen die von der Mehrzahl von Sensoren auflösbaren Winkelunterschiede wie in Fig. 8 oder Fig. 9 dargestellt 5,17°. Dabei entspricht dies in Fig. 20 bis Fig. 22 in Analogie zu Fig. 11 bis Fig. 13 einem Betätigungswinkel von 10°, in Fig. 23 bis Fig. 25 in Analogie zu Fig. 14 bis Fig. 16 einem Betätigungswinkel von 15° sowie in Fig. 26 bis Fig. 28 in Analogie zu Fig. 17 bis Fig. 19 einem Betätigungswinkel von 18,3°. Der in den Ausführungsbeispielen voneinander abweichende Proportionalwert zwischen dem Betätigungswinkel und dem Geberwinkel wird durch eine Veränderung der Anordnung eines Koppelelements 334 erreicht. So entspricht die Anordnung des Koppelelements 334 bei dem in Fig. 10 dargestellten Ausführungsbeispiel eines Übersetzungshebels 108 der radial von der ersten Achse 222 entferntesten Aufnahme 336 der Darstellung in Fig. 20 bis Fig. 22, der mittleren Aufnahme 336 der Darstellung in Fig. 23 bis Fig. 25 und der am nächsten zur ersten Achse 222 angeordneten Aufnahme 336 der Darstellung in Fig. 26 bis Fig. 28.

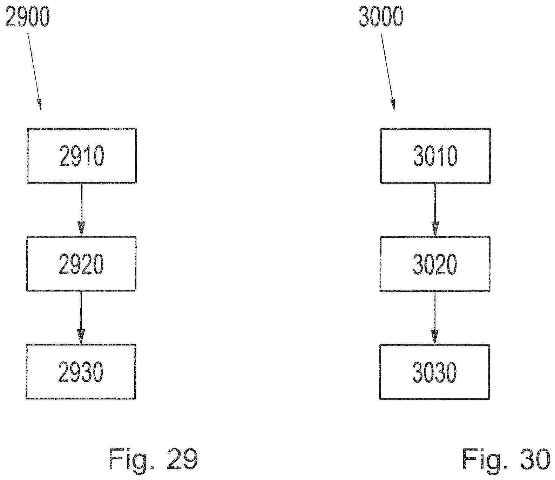

Fig. 29 zeigt ein Ablaufdiagramm eines Verfahrens 2900 zum Herstellen einer Übersetzungsvorrichtung gemäß einem Ausführungsbeispiel der vorliegenden Erfindung. Bei der Übersetzungsvorrichtung kann es sich um eine Variante des in Fig. 1 bis Fig. 5 beziehungsweise in Detailansichten oder Teilaspekten in Fig. 6 bis Fig. 28 gezeigten und beschriebenen Ausführungsbeispiels einer Übersetzungsvorrichtung 104 handeln. Das Verfahren 2900 zum Herstellen einer Übersetzungsvorrichtung zum Übersetzen eines Betätigungswinkels eines Wählhebels für eine Schaltbetätigung für ein Fahrzeuggetriebe umfasst einen Schritt 2910 des Bereitstellens eines Übersetzungshebels und ergänzend oder alternativ eines Signalhebels und ergänzend oder alternativ einer Mitnahmeeinrichtung, einen Schritt 2920 des Konfigurierens eines Kraftangriffspunkts der Mitnahmeeinrichtung zwischen dem Übersetzungshebel und dem Signalhebel, um einen Proportionalwert zwischen dem Betätigungswinkel und einem Geberwinkel des Signalhebels einzustellen sowie einen Schritt 2930 des Anordnens des Übersetzungshebels und ergänzend oder alternativ der Mitnahmeeinrichtung und ergänzend oder alternativ des Signalhebels, wobei der Übersetzungshebel zum Aufnehmen des Betätigungswinkels des Wählhebels drehbar um eine erste Achse gelagert ist, wobei der Signalhebel zum Bereitstellen des Geberwinkels für ein Geberelement eines Sensors drehbar um eine zweite Achse gelagert ist, und wobei die Mitnahmeeinrichtung den Übersetzungshebel mit dem Signalhebel koppelt, um den Betätigungswinkel in den Geberwinkel des Signalhebels zu übersetzen.

Fig. 30 zeigt ein Ablaufdiagramm eines Verfahrens 3000 zum Übersetzen eines Betätigungswinkels eines Wählhebels für eine Schaltbetätigung für ein Fahrzeuggetriebe gemäß einem Ausführungsbeispiel der vorliegenden Erfindung. Bei der Übersetzungsvorrichtung kann es sich um eine Variante des in Fig. 1 bis Fig. 5 beziehungsweise in Detailansichten oder Teilaspekten in Fig. 6 bis Fig. 28 gezeigten und beschriebenen Ausführungsbeispiels einer Übersetzungsvorrichtung 104 handeln. Das Verfahren 3000 zum Übersetzen eines Betätigungswinkels eines Wählhebels für eine Schaltbetätigung für ein Fahrzeuggetriebe umfasst einen Schritt 3010 des Drehens des Übersetzungshebels um eine erste Achse ansprechend auf ein Betätigen des Wählhebels, um einen Betätigungswinkel einzustellen, einen Schritt 3020 des Übertragens der Bewegung des Übersetzungshebels auf einen Signalhebel, wobei der Betätigungswinkel auf einen Geberwinkel des Signalhebels übersetzt wird, wobei ein Proportionalwert zwischen dem Betätigungswinkel und dem Geberwinkel über einen konfigurierbaren Kraftangriffspunkt zwischen dem Übersetzungshebel und dem Signalhebel einstellbar ist, sowie einen Schritt 3030 des Bereitstellens des Geberwinkels für ein Geberelement eines Sensors mittels des Signalhebels, der drehbar um eine zweite Achse gelagert ist.

Die beschriebenen und in den Figuren gezeigten Ausführungsbeispiele sind nur beispielhaft gewählt.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 102: Fahrzeuggetriebe
- 104: Übersetzungsvorrichtung
- 106: Motor
- 108: Übersetzungshebel
- 110: Mitnahmeeinrichtung
- 112: Signalhebel
- 114: Betätigungselement, Wählhebel

- 220: Kraftangriffspunkt
- 222: erste Achse
- 224: zweite Achse
- α: Betätigungswinkel
- β: Geberwinkel

- 330: Geberelement
- 332: Sensor
- 334: Koppelelement
- 336: Aufnahme
- 338: Leiterplatte
- 340: Sperreinrichtung
- 342: Gehäuse
- 344: untere Blende
- 346: obere Blende
- 348: Schraube
- 350: Anschlag

- 560: Lagerschale
- 562: Montageschrauben
- 564: Lagerring
- 566: Lagerring
- 1070: Gegenlager
- 1072: Sperraussparung

- 1176: Abstand des Kraftangriffspunkts zur ersten Achse

- 2900: Verfahren
- 2910: Schritt des Bereitstellens
- 2920: Schritt des Konfigurierens
- 2930: Schritt des Anordnens

- 3000: Verfahren
- 3010: Schritt des Drehens
- 3020: Schritt des Übertragens
- 3030: Schritt des Bereitstellens

## Patentansprüche

1. Übersetzungsvorrichtung (104) zum Übersetzen eines Betätigungswinkels (α) eines Wählhebels (114) für eine Schaltbetätigung für ein Fahrzeuggetriebe (102), wobei von dem Wählhebel (114) eine Mehrzahl von Betätigungswinkeln (α) einnehmbar ist, und wobei die Übersetzungsvorrichtung (104) die folgenden Merkmale aufweist:
einen Übersetzungshebel (108), der zum Aufnehmen des Betätigungswinkels (α) des Wählhebels (114) drehbar um eine erste Achse (222) gelagert ist;
einen Signalhebel (112), der zum Bereitstellen eines Geberwinkels (β) für ein Geberelement (330) eines Sensors (332) drehbar um eine zweite Achse (224) gelagert ist; und
eine Mitnahmeeinrichtung (110), die den Übersetzungshebel (108) mit dem Signalhebel (112) koppelt, um den Betätigungswinkel (α) in den Geberwinkel (β) des Signalhebels (112) zu übersetzen, wobei ein Kraftangriffspunkt (220) zwischen dem Übersetzungshebel (108) und dem Signalhebel (112) konfigurierbar ist, um einen Proportionalwert zwischen dem Betätigungswinkel (α) und dem Geberwinkel (β) einzustellen.

2. Übersetzungsvorrichtung (104) gemäß Anspruch 1, **dadurch gekennzeichnet, dass** die Mitnahmeeinrichtung (110) ein Koppelelement (334) und eine, insbesondere lineare, Führungseinrichtung für das Koppelelement (334) umfasst, wobei das Koppelelement (334) in einer Aufnahme an dem Übersetzungshebel (108) anordenbar ist und die Führungseinrichtung an dem Signalhebel (112) anordenbar ist.

3. Übersetzungsvorrichtung (104) gemäß einem der vorangegangenen Ansprüche, **dadurch gekennzeichnet, dass** das Koppelelement (334) einen Stift oder einen Bolzen umfasst.

4. Übersetzungsvorrichtung (104) gemäß einem der vorangegangenen Ansprüche, **dadurch gekennzeichnet, dass** der Übersetzungshebel (108) zumindest eine weitere Aufnahme (336) aufweist, wobei die zumindest eine weitere Aufnahme (336) und die zumindest eine Aufnahme (336) radial zu der Rotationsachse (222) des Übersetzungshebels (108) angeordnet sind und einen unterschiedlichen Abstand (1176) zu der ersten Achse (222) aufweisen, wobei das Koppelelement (334) in der zumindest einen Aufnahme (336) und/oder der zumindest einen weiteren Aufnahme (336) anordenbar ist.

5. Übersetzungsvorrichtung (104) gemäß einem der vorangegangenen Ansprüche, **dadurch gekennzeichnet, dass** an dem Signalhebel (112) als ein Geberelement (330) zumindest ein Magnet angeordnet ist.

6. Übersetzungsvorrichtung (104) gemäß einem der vorangegangenen Ansprüche, **dadurch gekennzeichnet, dass** neben dem Signalhebel (112) eine Leiterplatte (338) angeordnet ist, wobei in und/oder auf der Leiterplatte (338) zumindest ein Sensor (332) angeordnet ist, wobei das Geberelement (330) entlang einer Kreisbahn über die Leiterplatte (338) in einer zur Leiterplatte (338) in einem Toleranzbereich parallelen Ebene bewegbar ist.

7. Übersetzungsvorrichtung (104) gemäß einem der vorangegangenen Ansprüche, **gekennzeichnet durch** eine Sperreinrichtung (340), die in einem verriegelten Zustand eine Bewegung des Übersetzungshebels (108) und/oder des Signalhebels (112) sperrt, wobei die Sperreinrichtung (340) ausgebildet ist, um in dem verriegelten Zustand in eine Sperraussparung (1072) des Übersetzungshebels (108) einzugreifen.

8. Übersetzungsvorrichtung (104) gemäß einem der vorangegangenen Ansprüche **dadurch gekennzeichnet, dass** die Übersetzungsvorrichtung (104) ein Gehäuse (342) aufweist, wobei die erste Achse (222) und/oder die zweite Achse (224) unter Verwendung des Gehäuses (342) gestützt werden und/oder die erste Achse (222) und/oder die zweite Achse (224) an dem Gehäuse (342) gelagert sind.

9. Verfahren (2900) zum Herstellen einer Übersetzungsvorrichtung (104) zum Übersetzen eines Betätigungswinkels (α) eines Wählhebels (114) für eine Schaltbetätigung für ein Fahrzeuggetriebe (102), wobei das Verfahren (2900) die folgenden Schritte aufweist:
Bereitstellen (2910) eines Übersetzungshebels (108), eines Signalhebels (112) und einer Mitnahmeeinrichtung (110);
Konfigurieren (2920) eines Kraftangriffspunkts (220) der Mitnahmeeinrichtung (110) zwischen dem Übersetzungshebel (108) und dem Signalhebel (112), um einen Proportionalwert zwischen dem Betätigungswinkel (α) und einem Geberwinkel (β) des Signalhebels (112) einzustellen; und
Anordnen (2930) des Übersetzungshebels (108), der Mitnahmeeinrichtung (110) und des Signalhebels (112), um den Übersetzungshebel (108) zum Aufnehmen des Betätigungswinkels (α) des Wählhebels (114) drehbar um eine erste Achse (222) zu lagern, den Signalhebel (112) zum Bereitstellen des Geberwinkels (β) für ein Geberelement (330) eines Sensors (332) drehbar um eine zweite Achse (224) zu lagern, wobei die Mitnahmeeinrichtung (110) den Übersetzungshebel (108) mit dem Signalhebel (112) koppelt, um den Betätigungswinkel (α) in den Geberwinkel (β) des Signalhebels (112) zu übersetzen.

10. Verfahren (3000) zum Übersetzen eines Betätigungswinkels (α) eines Wählhebels (114) für eine Schaltbetätigung für ein Fahrzeuggetriebe (102), **gekennzeichnet durch** die folgenden Schritte:
Drehen (3010) des Übersetzungshebels (108) um eine erste Achse (222) ansprechend auf ein Betätigen des Wählhebels (114), um den Betätigungswinkel (α) einzustellen;
Übertragen (3020) der Bewegung des Übersetzungshebels (108) auf einen Signalhebel (112), wobei der Betätigungswinkel (α) auf einen Geberwinkel (β) des Signalhebels (112) übersetzt wird, wobei ein Proportionalwert zwischen dem Betätigungswinkel (α) und dem Geberwinkel (β) über einen konfigurierbaren Kraftangriffspunkt (220) zwischen dem Übersetzungshebel (108) und dem Signalhebel (112) einstellbar ist; und
Bereitstellen (3030) des Geberwinkels (β) für ein Geberelement (330) eines Sensors (332) mittels des Signalhebels (112), der drehbar um eine zweite Achse (224) gelagert ist.

## Claims

1. Transmission apparatus (104) for transmitting an actuating angle (α) of a selector lever (114) for a shifting actuation for a vehicle transmission (102), it being possible for a plurality of actuating angles (a) to be assumed by the selector lever (114), and the transmission apparatus (104) having the following features:
a transmission lever (108) which is mounted such that it can be rotated about a first axle (222) for recording the actuating angle (α) of the selector lever (114);
a signal lever (112) which is mounted such that it can be rotated about a second axle (224) for providing an encoder angle (β) for an encoder element (330) of a sensor (332); and
a driving device (110) which couples the transmission lever (108) to the signal lever (112), in order to transmit the actuating angle (α) into the encoder angle (β) of the signal lever (112), it being possible for a force action point (220) to be configured between the transmission lever (108) and the signal lever (112), in order to set a proportional value between the actuating angle (α) and the encoder angle (β).

2. Transmission apparatus (104) according to Claim 1, **characterized in that** the driving device (110) comprises a coupler element (334) and a, in particular linear, guide device for the coupler element (334), it being possible for the coupler element (334) to be arranged in a receptacle on the transmission lever (104), and it being possible for the guide device to be arranged on the signal lever (112).

3. Transmission apparatus (104) according to either of the preceding claims, **characterized in that** the coupler element (334) comprises a pin or a journal.

4. Transmission apparatus (104) according to one of the preceding claims, **characterized in that** the transmission lever (108) has at least one further receptacle (336), the at least one further receptacle (336) and the at least one receptacle (336) being arranged radially with respect to the rotational axis (222) of the transmission lever (108) and being at a different spacing (1176) from the first axle (222), it being possible for the coupler element (334) to be arranged in the at least one receptacle (336) and/or the at least one further receptacle (336).

5. Transmission apparatus (104) according to one of the preceding claims, **characterized in that** at least one magnet is arranged as an encoder element (330) on the signal lever (112).

6. Transmission apparatus (104) according to one of the preceding claims, **characterized in that** a printed circuit board (338) is arranged next to the signal lever (112), at least one sensor (332) being arranged in and/or on the printed circuit board (338), it being possible for the encoder element (330) to be moved along a circular track over the printed circuit board (338) in a plane which is parallel to the printed circuit board (338) within a tolerance range.

7. Transmission device (104) according to one of the preceding claims, **characterized by** a locking device (340) which, in a locked state, locks a movement of the transmission lever (108) and/or of the signal lever (112), the locking device (340) being configured, in the locked state, to engage into a locking cut-out (1072) of the transmission lever (108).

8. Transmission apparatus (104) according to one of the preceding claims, **characterized in that** the transmission apparatus (104) has a housing (342), the first axle (222) and/or the second axle (224) being supported with the use of the housing (342), and/or the first axle (222) and/or the second axle (224) being mounted on the housing (342).

9. Method (2900) for producing a transmission apparatus (104) for transmitting an actuating angle (α) of a selector lever (114) for a shifting actuation for a vehicle transmission (102), the method (2900) having the following steps:
provision (2910) of a transmission lever (108), a signal lever (112) and a driving device (110);
configuration (2920) of a force action point (220) of the driving device (110) between the transmission lever (108) and the signal lever (112), in order to set a proportional value between the actuating angle (α) and an encoder angle (β) of the signal lever (112); and
arrangement (2930) of the transmission lever (108), the driving device (110) and the signal lever (112), in order to mount the transmission lever (108) such that it can be rotated about a first axle (222) for recording the actuating angle (α) of the selector lever (114), and in order to mount the signal lever (112) such that it can be rotated about a second axle (224) for providing the encoder angle (β) for an encoder element (330) of a sensor (332), the driving device (110) coupling the transmission lever (108) to the signal lever (112), in order to transmit the actuating angle (α) into the encoder angle (β) of the signal lever (112).

10. Method (3000) for transmitting an actuating angle (α) of a selector lever (114) for a shifting actuation for a vehicle transmission (102), **characterized by** the following steps:
rotation (3010) of the transmission lever (108) about a first axle (222) in response to an actuation of the selector lever (114), in order to set the actuating angle (α);
transmission (3020) of the movement of the transmission lever (108) to a signal lever (112), the actuating angle (α) being transmitted to an encoder angle (β) of the signal lever (112), it being possible for a proportional value between the actuating angle (α) and the encoder angle (β) to be set via a force action point (220) which can be configured between the transmission lever (108) and the signal lever (112); and
provision (3030) of the encoder angle (β) for an encoder element (330) of a sensor (332) by means of the signal lever (112) which is mounted such that it can be rotated about a second axle (224).

## Revendications

1. Ensemble de conversion (104) qui convertit un angle d'actionnement (α) d'un levier de sélection (114) pour l'actionnement d'un changement de rapport de la transmission (102) d'un véhicule, plusieurs angles d'actionnement (α) pouvant être pris par le levier de sélection (114) et l'ensemble de conversion (104) présentant les caractéristiques suivantes :
un levier de conversion (108) monté à rotation autour d'un premier axe (222) pour enregistrer l'angle d'actionnement (α) du levier de sélection (114),
un levier de signalisation (112) monté à rotation autour d'un deuxième axe (224) pour délivrer un angle d'activation (β) pour un élément d'activation (330) d'un capteur (332), et
un dispositif d'entraînement (110) qui accouple le levier de conversion (108) avec le levier de signalisation (112) pour convertir l'angle d'actionnement (α) en l'angle d'activation (β) du levier de signalisation (112), un point (220) d'application de force entre le levier de conversion (108) et le levier de signalisation (112) pouvant être configuré de manière à établir une valeur proportionnelle entre l'angle d'actionnement (α) et l'angle d'activation (β).

2. Ensemble de conversion (104) selon la revendication 1, **caractérisé en ce que** le dispositif d'entraînement (110) comporte un élément d'accouplement (334) et un dispositif de guidage, en particulier linéaire, pour l'élément d'accouplement (334), l'élément d'accouplement (334) pouvant être disposé dans un logement prévu sur le levier de conversion (108) et le dispositif de guidage pouvant être disposé sur le levier de signalisation (112).

3. Ensemble de conversion (104) selon l'une des revendications précédentes, **caractérisé en ce que** l'élément d'accouplement (334) comporte une tige ou un goujon.

4. Ensemble de conversion (104) selon l'une des revendications précédentes, **caractérisé en ce que** le levier de conversion (108) présente au moins un autre logement (336), le ou les autres logements (336) et le ou les logements (336) étant disposés radialement par rapport à l'axe de rotation (222) du levier de conversion (108) et présentant des distances (1176) différentes par rapport au premier axe (222), l'élément d'accouplement (334) pouvant être disposé dans le ou les logements (336) et/ou dans le ou les autres logements (336).

5. Ensemble de conversion (104) selon l'une des revendications précédentes, **caractérisé en ce qu'**au moins un aimant servant d'élément d'activation (330) est disposé sur le levier de signalisation (112).

6. Ensemble de conversion (104) selon l'une des revendications précédentes, **caractérisé en ce qu'**une carte de circuit (338) est disposée à côté du levier de signalisation (112), au moins un capteur (332) étant disposé dans et/ou sur la carte de circuit (338), l'élément d'activation (330) pouvant être déplacé le long d'une piste circulaire au-dessus de la carte de circuit (338), dans un plan parallèle dans une plage de tolérance à la carte de circuit (338).

7. Ensemble de conversion (104) selon l'une des revendications précédentes, **caractérisé par** un dispositif de blocage (340) qui bloque le déplacement du levier de conversion (108) et/ou du levier de signalisation (112) dans une position verrouillée, le dispositif de blocage (340) étant configuré pour engager une découpe de blocage (1072) du levier de conversion (108) lorsqu'il est en position verrouillée.

8. Ensemble de conversion (104) selon l'une des revendications précédentes, **caractérisé en ce que** l'ensemble de conversion (104) présente un boîtier (342), le premier axe (222) et/ou le deuxième axe (224) étant soutenus par le boîtier (342) et/ou le premier axe (222) et/ou le deuxième axe (224) étant montés sur le boîtier (342) .

9. Procédé (2900) de fabrication d'un ensemble de conversion (104) qui convertit un angle d'actionnement (α) d'un levier de sélection (114) pour l'actionnement d'un changement de rapport de la transmission (102) d'un véhicule, le procédé (2900) présentant les étapes suivantes :
prévoir (2910) un levier de conversion (108), un levier de signalisation (112) et un dispositif d'entraînement (110),
configurer (2920) le point (220) d'application de force du dispositif d'entraînement (110) entre le levier de conversion (108) et le levier de signalisation (112) de manière à établir une valeur proportionnelle entre l'angle d'actionnement (α) et un angle d'activation (β) du levier de signalisation (112) et
disposer (2930) le levier de conversion (108), le dispositif d'entraînement (110) et le levier de signalisation (112) de manière à monter le levier de conversion (108) à rotation autour d'un premier axe (222) en vue d'enregistrer l'angle d'actionnement (α) du levier de sélection (114), monter le levier de signalisation (112) à rotation autour d'un deuxième axe (224) pour délivrer l'angle d'activation (β) pour un élément d'activation (330) d'un capteur (332), le dispositif d'entraînement (110) accouplant le levier de conversion (108) avec le levier de signalisation (112) pour convertir l'angle d'actionnement (α) en l'angle d'activation (β) du levier de signalisation (112).

10. Procédé (3000) de conversion de l'angle d'actionnement (α) d'un levier de sélection (114) pour l'actionnement d'un changement de rapport de la transmission (102) d'un véhicule, **caractérisé par** les étapes suivantes :
rotation (3010) du levier de conversion (108) autour d'un premier axe (222) en correspondance à l'actionnement du levier de sélection (114) pour établir l'angle d'actionnement (α),
transfert (3020) du déplacement du levier de conversion (108) sur un levier de signalisation (112), l'angle d'actionnement (α) étant converti en un angle d'activation (β) du levier de signalisation (112), une valeur proportionnelle pouvant être établie entre l'angle d'actionnement (α) et l'angle d'activation (β) par l'intermédiaire d'un point configurable d'application de la force entre le levier de conversion (108) et le levier de signalisation (112) et
fourniture (3030) de l'angle d'activation (β) à un élément d'activation (330) d'un capteur (332) au moyen du levier de signalisation (112) monté à rotation autour d'un deuxième axe (224).
